# FASCICULE DE BREVET EUROPEEN

(11) **EP 3 416 179 B1**
(45) Date de publication et mention de la délivrance du brevet: **17.02.2021**
(21) Numéro de dépôt: 18163630.9
(22) Date de dépôt: 23.03.2018
(51) Int. Cl.: H01H 71/14, H02H 9/02

(54) **APPAREIL DE PROTECTION ÉLECTRIQUE COMPORTANT UN DISPOSITIF LIMITEUR DE COURANT**
ELEKTRISCHES SCHUTZGERÄT, DAS EINE STROMBEGRENZUNGSVORRICHTUNG UMFASST
ELECTRICAL CIRCUIT BREAKER WITH CURRENT LIMITING DEVICE

(30) Priorité: 16.06.2017 FR 1755496
(43) Date de publication de la demande: 19.12.2018
(73) Titulaire: Schneider Electric Industries SAS, 92500 Rueil-Malmaison (FR)
(72) Inventeur: RAPEAUX, Michel, 38050 GRENOBLE (FR); DOMEJEAN, Eric, 38050 GRENOBLE (FR)
(74) Mandataire: Colette, Marie-Françoise

(56) Documents cités:
- EP-A2- 0 179 978
- EP-A2- 0 655 760
- WO-A1-93/07667
- DE-A1- 4 228 297
- DE-A1-102005 006 953
- US-A1- 2015 124 366

## Description

### DOMAINE TECHNIQUE

La présente invention concerne un appareil de protection électrique comprenant au moins un conducteur principal et, pour le ou chaque conducteur principal, au moins un dispositif limiteur de courant connecté en série avec ledit conducteur principal pour limiter le courant lorsqu'un seuil de courant ou de température est dépassé, ledit dispositif limiteur comportant un élément réalisé en un matériau à coefficient de température positif dit CTP, et étant apte à commander des moyens de déclenchement du mécanisme d'ouverture des contacts de l'appareil de protection, de manière à entraîner l'ouverture des contacts de l'appareil lorsque le seuil précité est dépassé entraînant un changement d'état dudit élément entre un état de résistance faible et un état de résistance élevée.

### ETAT DE LA TECHNIQUE ANTERIEURE

Les disjoncteurs dits faible calibre utilisent usuellement une bobine magnétique composée d'un grand nombre de tours ainsi qu'un élément dit chauffeur associé à un bilame, la bobine servant à la fois de moyen de détection des court-circuits et de moyen d'actionnement du mécanisme d'ouverture du disjoncteur, tandis que le chauffeur permet la déflection du bilame en cas de surcharge de courant et constitue également un moyen d'actionnement du mécanisme d'ouverture précité.

Cette architecture est à l'origine d'une valeur importante de la résistance totale du disjoncteur et donc d'une perte Joule dissipée importante (Typiquement supérieure à 2W au courant nominal).

On connaît le document US 5 999 384 décrivant un disjoncteur miniature dans lequel un composant CTP remplace le bilame, la bobine, ainsi que la chambre de coupure. Le composant CTP assure la fonction de détection des défauts (surcharge ou court-circuit), limite le courant de défaut, et coopère avec une bobine pour réaliser le déclenchement d'un mécanisme d'ouverture des contacts de l'appareil.

Ainsi, lors de l'apparition d'un défaut de court-circuit, le courant de court-circuit important chauffe le composant CTP très rapidement (en quelques millisecondes), ce qui génère l'augmentation de résistance du composant CTP, augmentant de ce fait la valeur du courant à travers la bobine afin d'ouvrir les contacts de l'appareil, de la même manière que lors de l'apparition d'une surcharge électrique, mais plus rapidement.

On connaît les documents DE102005006953 et EP0655760 décrivant un appareil comportant les caractéristiques du préambule de la revendication 1.

### EXPOSE DE L'INVENTION

La présente invention propose un appareil de protection électrique comportant un dispositif de limitation du courant, ledit appareil étant de conception simplifiée, ceci permettant de réduire son coût, et dans lequel les pertes Joules dissipées sont réduites de manière significative.

A cet effet, la présente invention a pour objet un appareil de protection électrique selon la revendication 1.

Selon une caractéristique particulière, lesdits éléments CTP comportent en outre des moyens de détection de défauts de surcharge et des moyens de détection de défauts de court-circuit.

Selon une autre caractéristique, les moyens de déclenchement précités sont commandés par la variation de l'épaisseur des éléments CTP durant le changement d'état précité.

Selon une autre caractéristique, cet appareil comporte des moyens dits d'amplification permettant d'exercer, à partir d'un petit déplacement d'une portion des éléments précités une force d'intensité élevée.

Selon une autre caractéristique, le nombre d'éléments empilés est compris entre deux et dix.

Avantageusement, le nombre d'éléments empilés est de quatre.

Selon une autre caractéristique, cet appareil comporte des moyens pour limiter la dilatation volumique des éléments CTP suivant au moins une direction autre que la direction préférentielle.

Selon une autre caractéristique, les moyens précités comportent une métallisation réalisée sur au moins une face desdits éléments CTP, par exemple par une structure de type dendritique ou la réalisation de micro-porosités par gravure chimique.

Selon une autre caractéristique, l'épaisseur de cette métallisation est supérieure à 50 µm lorsque celle-ci est réalisée en cuivre, et supérieure à 35 µm, lorsque celle-ci est réalisée en nickel.

Selon une autre caractéristique, le dispositif limiteur précité comporte en outre au moins un shunt connecté en parallèle avec respectivement au moins un élément CTP, et permettant de fixer la valeur maximale du courant limité après la transition de l'élément CTP.

Selon une autre caractéristique, la valeur résistive du (ou de chaque) shunt est comprise entre dix fois et vingt fois la valeur de la résistance CTP correspondante à température ambiante.

Selon une autre caractéristique, le dispositif limiteur précité comporte en outre au moins un composant dit protecteur contre les surtensions, connecté en parallèle avec respectivement au moins un élément CTP, et destiné à limiter d'éventuelles surtensions susceptibles d'endommager le composant CTP.

Selon une autre caractéristique, chaque élément CTP est réalisé à base d'un polymère semi-cristallin, tel que le polyéthylène, le polypropylène, etc....

Selon une autre caractéristique, cet appareil est un disjoncteur miniature. Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en plan d'un disjoncteur selon l'invention, dont on a retiré le couvercle de manière à montrer sa partie intérieure,
- La figure 2 est une représentation schématique, illustrant le fonctionnement d'un dispositif de limitation selon l'invention,
- La figure 3 est une représentation graphique illustrant l'évolution de la résistance du composant CTP (échelle de gauche) et de la dilatation volumique en pourcentage (échelle de droite), en fonction de la température,

- La figure 4 est une représentation graphique illustrant la dilatation volumique d'un matériau CTP en fonction de la température pour différentes charges appliquées sur le matériau,
- La figure 5 illustre la courbe de déclenchement typique d'un disjoncteur standard 2A, représentant graphiquement le temps nécessaire à l'ouverture des contacts en fonction de l'intensité,
- Les figures 6 et 7 représentent graphiquement respectivement la valeur de la contrainte thermique et le courant crête, en fonction du courant, dans le cas d'un disjoncteur classique pour l'une des courbes, et dans le cas d'un disjoncteur selon l'invention, pour l'autre des courbes, et
- La figure 8 représente graphiquement en fonction du temps, le courant de défaut traversant un appareil selon l'invention avant limitation par le CTP, ce même courant de défaut après limitation par le CTP, et la tension d'arc, dans le cas d'un disjoncteur selon l'invention.

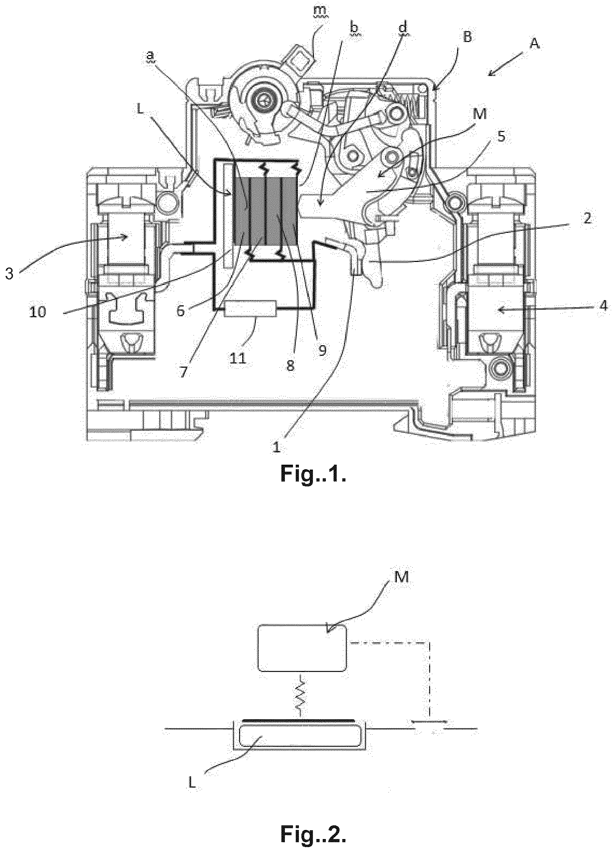

Sur la figure 1, on voit un disjoncteur basse tension A comportant de manière connue en soi, logé dans un boîtier B de forme sensiblement parallélépipédique, deux contacts 1,2 dont l'un 1 fixe, est relié électriquement à l'une des bornes 3, dite d'entrée, de l'appareil, tandis que l'autre 2, dit mobile, est relié électriquement à l'autre 4, dite de sortie, des deux bornes 3,4. Ce contact mobile 2 est apte à être déplacé entre une position fermée des deux contacts 1,2 et une position de séparation de ces mêmes contacts, par l'intermédiaire d'un mécanisme M d'ouverture et fermeture apte à être commandé soit manuellement soit automatiquement. La commande manuelle est réalisée par l'intermédiaire d'une manette m apte à être actionnée par un utilisateur. L'ouverture automatique des contacts 1,2 est réalisée par l'intermédiaire de moyens de déclenchement d commandés soit par des moyens de détection d'un défaut d'origine thermique signalant une surcharge électrique, soit par des moyens de détection d'un défaut d'origine magnétique, signalant un défaut de court-circuit. Ces moyens de déclenchement sont destinés à coopérer avec une barre de déclenchement 5 apte, lorsque celle-ci est actionnée, à libérer un accrochage mécanique, cette libération ayant pour effet d'entraîner l'ouverture automatique des contacts d'arc 1,2.

Cet appareil comporte en outre un dispositif de limitation du courant, placé sur la ligne de courant entre la borne dite d'entrée 3 de l'appareil et le contact fixe 1, ce dispositif étant destiné à limiter la valeur du courant de défaut avant l'ouverture des contacts 1,2.

Selon la réalisation décrite, ce dispositif de limitation comporte un ensemble de plusieurs composants 6,7,8,9 constitués chacun par un matériau à coefficient de température positif, dit matériau CTP. De manière connue en soi, à la température normale d'utilisation, la résistance électrique de ce type de matériau est très faible. En cas d'une surintensité traversant ce matériau, la montée en température du matériau au-delà d'une valeur critique génère une augmentation rapide de la résistance électrique dudit matériau permettant de limiter l'augmentation de courant. Cette augmentation de la résistance est générée par un changement d'état du matériau de l'élément entre un état dit non transité et un état dit transité. Selon cette réalisation particulière de l'invention, ce dispositif de limitation est constitué par l'empilement de quatre composants CTP 6,7,8,9, chacun de ces composants présentant une forme sensiblement parallélépipédique, ces éléments étant accolés par leur face présentant la plus grande surface. Cet ensemble de composants forme un bloc L de forme sensiblement parallélépipédique, ce bloc étant fixé par l'une a de ses faces latérales, sur un élément de support fixe 10 par rapport au boîtier de l'appareil.

De manière connue en soi, chaque composant subit lors du changement d'état précité une dilatation, cette dilatation conduisant à une expansion volumique pouvant aller jusqu'à +10% à 20% du volume initial.

Selon l'invention, cette expansion volumique des composants est utilisée pour déclencher le mécanisme M d'ouverture des contacts précités, tel qu'illustré schématiquement sur la figure 2. Sur la figure1, on voit que la face b du bloc L de composants précité, qui est opposée à celle a qui est fixée au support précité 10, coopère avec la barre de déclenchement 5, de sorte qu'une expansion volumique de l'ensemble des composants en direction de cette barre de déclenchement 5 entraîne l'actionnement de ladite barre, et donc le déclenchement du mécanisme M d'ouverture des contacts.

Ainsi, selon cette réalisation particulière de l'invention, ce dispositif de limitation assure à la fois les fonctions de détection des défauts d'origine thermique, de détection des défauts d'origine magnétique, de chambre de coupure, de limitation du courant de défaut et de moyens d de déclenchement du mécanisme d'ouverture des contacts.

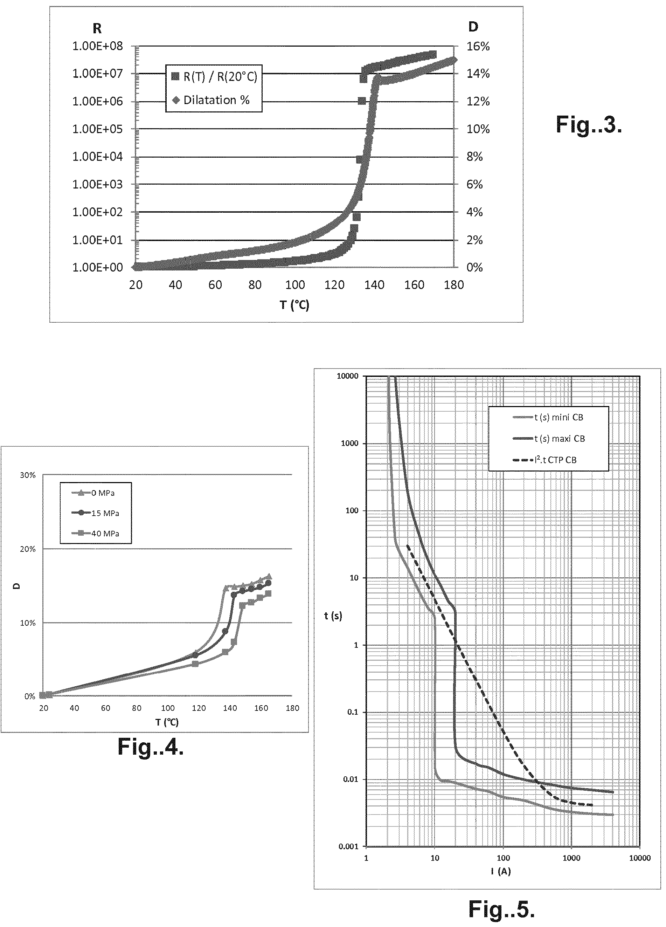

La figure 3 illustre, pour un composant CTP à base de polyéthylène chargé noir de carbone, l'évolution de la résistance R du composant CTP (échelle de gauche) et de la dilatation volumique D en % (échelle de droite) en fonction de la température T.

La mise en œuvre de la fonction actionneur (déclenchement du disjoncteur) fait appel à la dilatation du composant suivant une direction préférentielle, par exemple dans le sens de l'épaisseur du composant. Afin d'obtenir une dilatation maximale suivant cette direction, il est souhaitable de limiter la dilatation volumique suivant les deux autres directions : ceci peut être obtenu par exemple par différents moyens tels que la métallisation dendritique (technologie connue pour l'obtention d'une bonne résistance de contact de la métallisation assurée par l'accrochage des dendrites dans le matériau CTP). L'épaisseur de cette métallisation doit être suffisante (typiquement supérieure à 50µm pour du cuivre ou 35µm pour du nickel) pour ne pas se rompre lors de la dilatation volumique du composant.

Tel que ceci est le cas pour la réalisation particulière décrite sur la figure 1, afin d'obtenir une dilatation directement exploitable par le mécanisme d'ouverture du disjoncteur, il est possible d'empiler les composants suivant la direction préférentielle (ce qui correspond à une mise en série mécanique des composants). La juxtaposition de deux à dix composants, de préférence quatre, permet d'obtenir une dilatation suffisante en distance (typiquement de l'ordre de 1 à 2mm) et en effort. La figure 4 montre l'évolution de la dilatation volumique D en % d'un matériau CTP à base de polyéthylène en fonction de la température T et pour différentes charges appliquées (MPa) (0MPa,15MPa,40MPa) sur le matériau. Ces valeurs de charge correspondent aux efforts par unité de surface fournis par le composant CTP pour une dilatation donnée.

La figure 5 illustre la courbe de déclenchement typique d'un disjoncteur CB 2A (les deux courbes en traits pleins correspondant respectivement aux courbes mini et maxi).

La transition du composant CTP est gouvernée uniquement par les phénomènes d'échange thermique (à la manière d'un bilame) et est caractérisée par l'équation I².t=Constante (courbe en pointillés) en mode adiabatique, c'est-à-dire pour des temps inférieurs à quelques secondes (pour lesquels les échanges thermiques sont négligeables).

Pour des temps très courts, typiquement inférieurs à 10ms, le temps nécessaire à l'ouverture des contacts après déclenchement du mécanisme impose une valeur minimale au temps de déclenchement, représenté sur le graphe ci-contre par l'asymptote vers 3-4ms.

L'arrangement particulier consistant en une mise en parallèle électrique et une mise en série mécanique des composants CTP, montré sur la figure 1, permet d'obtenir à la fois une faible résistance du disjoncteur et une dilatation résultante suffisante pour actionner le mécanisme de déclenchement. Afin de ne pas entraver la dilatation des composants CTP, le raccordement électrique sera réalisé avantageusement au moyen de connexions souples, dont l'épaisseur sera de l'ordre de 0.2mm à 0,4mm. Les contraintes de déclenchement (I².t) et de résistance à température ambiante du CTP (pertes Joules maxi) permettent de dimensionner le composant CTP. Un exemple de dimensionnement pour les calibres 1A,2A et 6A est donné ci-dessous.

| **Calibre (A)** | **Résistance CB (mΩ)** | **I²t.t Cste (A².s)** | **Energie Transition CTP (J)** | **Résistivité CTP (Ω.cm)** | **Surface CTP (cm²)** | **Epaisseur CTP (mm)** | **Nombre CTP en parallèle** | **Rshunt (Ω)** | **Résistance CB-PTC (mΩ)** |
|---|---|---|---|---|---|---|---|---|---|
| 1 | 2121 | 120 | 18 | 6 | 0,25 | 2 | 4 | 20 | 1132 |
| 2 | 624 | 480 | 70 | 6 | 1 | 2 | 4 | 5 | 283 |
| 6 | 88.6 | 4320 | 630 | 6 | 9 | 2 | 4 | 1 | 32 |

Dans ce tableau, l'appareil selon l'invention comporte 4 CTP en parallèle électriquement. Afin d'optimiser l'effet actionneur, ces CTP sont montées en série mécaniquement.

L'exemple de dimensionnement donné ci-dessus montre qu'il est possible, grâce à l'invention, de réduire, par exemple, d'un facteur 2 la résistance totale du disjoncteur, et donc les pertes Joules.

Tel qu'illustré sur la figure 1, un shunt 11 est connecté en parallèle avec le bloc L de composants CTP, et permet de fixer la valeur maximale du courant limité après la transition du CTP. La valeur résistive de ce shunt est typiquement de 10 à 20 fois la valeur de la résistance du bloc CTP à température ambiante.

Enfin, il est avantageux d'associer, non illustré sur la figure1, en parallèle au bloc L de composants CTP, un composant protecteur de surtension (type MOV) afin de limiter les éventuelles surtensions qui peuvent endommager les composants CTP, notamment lors d'une transition rapide de ceux-ci.

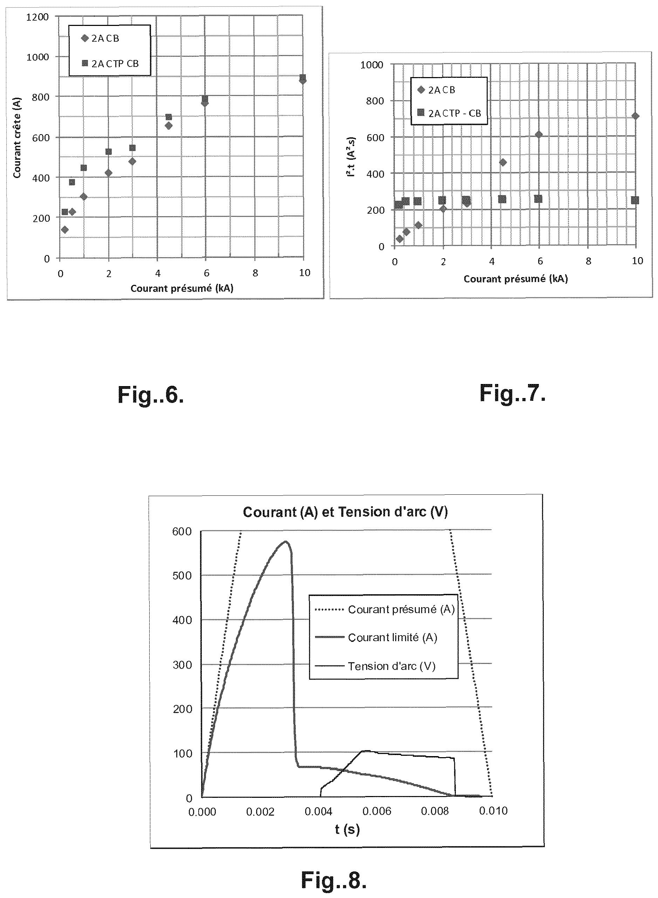

Les figures 6 et 7 sont des représentations graphiques donnant la valeur de la contrainte thermique I².t et du courant crête (Â) correspondant à un composant CTP dimensionné pour un calibre 2A, et associé à un shunt de 5 Ω. Les valeurs du composant CTP et du shunt ont été déterminées pour obtenir une valeur maximale du courant crête similaire à celle obtenue par le disjoncteur standard.

On remarque sur ces deux courbes que la contrainte thermique I².t est pratiquement constante pour tous les courants de court-circuit entre 200A et 10000A. L'énergie maximale vue par le shunt est de l'ordre de 200J, valeur qui sera prise en compte pour le dimensionnement de ce même shunt.

Les avantages conférés par l'invention sont les suivants :
Quel que soit le type de défaut électrique (surcharge ou court-circuit) survenant dans le circuit, l'ouverture des contacts du disjoncteur est réalisée sous courant limité (typiquement quelques msec après la transition des CTP, ce temps correspondant au temps nécessaire au mécanisme pour l'ouverture des contacts). La valeur de ce courant limité est déterminée simplement par la valeur résistive du shunt placé en parallèle aux composants CTP (voir figure 8, disjoncteur CTP 2A, court-circuit 1kA/240V, shunt 5Ω). Ce résultat permet d'augmenter sensiblement la durabilité des contacts du disjoncteur. Une autre option consiste à utiliser des matériaux de contact moins nobles, et donc moins couteux.

La valeur de la contrainte thermique vue par le disjoncteur et le circuit électrique en cas de défaut (surcharge ou court-circuit) est pratiquement constante, et ce quel que soit la valeur du courant de défaut. Cette caractéristique garantit la sélectivité amont de la solution proposée.

Les disjoncteurs à faible calibre (typiquement de courant nominal inférieur ou égal à 6A) font appel à une bobine magnétique composée d'un grand nombre de tours et à un chauffeur pour permettre la déflection du bilame en cas de surcharge de courant. Cette architecture est à l'origine d'une valeur importante de la résistance totale du disjoncteur et donc d'une perte Joule dissipée importante (typiquement supérieure à 2W au courant nominal) comme le montre le tableau ci-dessous.

Le tableau ci-dessous indique la perte de puissance en watts pour chaque calibre, par pôle :

| | | | | | | | | | | |
|---|---|---|---|---|---|---|---|---|---|---|
| Cal.(A) | 0,5 | 0,75 | 1 | 1,2 | 1,5 | 2 | 3 | 4 | 5 | 6 |
| W/pole | 2,2 | 2,96 | 2,3 | 2,4 | 2,1 | 2,5 | 2.2 | 2.4 | 2.5 | 2.7 |

Le tableau ci-dessous indique la chute de tension du dispositif en mV pour chaque calibre, par pôle :

| | | | | | | | | | | |
|---|---|---|---|---|---|---|---|---|---|---|
| Cal.(A) | 0,5 | 0,75 | 1 | 1,2 | 1,5 | 2 | 3 | 4 | 5 | 6 |
| mV/pole | 4400 | 3950 | 2300 | 2000 | 1400 | 1276 | 745 | 600 | 500 | 480 |

On voit ainsi que la solution proposée permet de réduire de manière significative la résistance du disjoncteur. Par exemple, la perte Joule dissipée peut être divisée par 2.

Les valeurs de puissance dissipée (perte Joule) sont données dans les catalogues des produits. Le client peut donc comparer ces données qui sont importantes pour l'installateur. Moins il y a de pertes Joules, plus il y a d'équipements dans un même espace, plus faible sera la ventilation dans cet espace.

En outre, la simplicité proposée permet de réduire sensiblement le coût du disjoncteur.

Bien entendu, l'invention n'est pas limitée au mode de réalisation décrit et illustré qui n'a été donné qu'à titre d'exemple.

Selon la réalisation décrite, un composant assure seul les deux fonctions de limitation du courant (effet CTP) et de déclenchement (effet actionneur), ceci permettant notamment une quasi-simultanéité des deux fonctions.

## Revendications

1. Appareil de protection électrique comprenant au moins un conducteur principal et, pour le ou chaque conducteur principal, au moins un dispositif limiteur de courant connecté en série avec ledit conducteur principal pour limiter le courant lorsqu'un seuil de courant ou de température est dépassé, ledit dispositif limiteur comportant un élément réalisé en un matériau à coefficient de température positif dit CTP, et étant apte à commander des moyens de déclenchement du mécanisme d'ouverture des contacts de l'appareil de protection, de manière à entraîner l'ouverture des contacts de l'appareil lorsque le seuil précité est dépassé entraînant un changement d'état dudit élément entre un état de résistance faible et un état de résistance élevée, ledit élément CTP précité (6,7,8,9) comportant les moyens de déclenchement précités (d), de telle manière que cet élément assure lui-même les fonctions de limitation du courant de défaut et de déclenchement du mécanisme (M) d'ouverture des contacts (1,2), les moyens de déclenchement précités (d) étant commandés par les variations de dimension, suivant une direction préférentielle de l'élément CTP précité (6 à 9), durant le changement d'état précité, cette variation de dimension étant apte à engendrer le déplacement d'une portion de l'élément CTP en direction d'une barre de déclenchement (5) appartenant aux moyens de déclenchement précités (d), cette barre étant apte lorsqu'elle est actionnée à libérer un accrochage mécanique du mécanisme de l'appareil, cette libération ayant pour effet d'entraîner l'ouverture automatique des contacts d'arc, **caractérisé en ce que** le dispositif limiteur précité comporte plusieurs éléments CTP (6 à 9) empilés suivant la direction préférentielle précitée et montés électriquement en parallèle.

2. Appareil de protection électrique selon la revendication 1, **caractérisé en ce que** lesdits éléments CTP (6,7,8,9) comportent en outre des moyens de détection de défauts de surcharge et des moyens de détection de défauts de court-circuit.

3. Appareil de protection selon la revendication 1 ou 2, **caractérisé en ce que** les moyens de déclenchement précités (d) sont commandés par la variation de l'épaisseur des éléments CTP CTP durant le changement d'état précité.

4. Appareil de protection électrique selon l'une quelconque des revendications précédentes, **caractérisé en ce qu'**il comporte des moyens d'amplification permettant d'exercer, à partir d'un petit déplacement d'une portion des éléments CTP précités (6 à 9), une force appliquée d'intensité élevée.

5. Appareil de protection électrique selon l'une quelconque des revendications précédentes, **caractérisé en ce que** le nombre d'éléments empilés (6 à 9) est compris entre deux et dix.

6. Appareil de protection électrique selon la revendication 5, **caractérisé en ce que** le nombre d'éléments empilés (6 à 9) est de quatre.

7. Appareil de protection électrique selon l'une quelconque des revendications précédentes, **caractérisé en ce qu'**il comporte des moyens pour limiter la dilatation volumique des éléments CTP suivant au moins une direction autre que la direction préférentielle.

8. Appareil de protection électrique selon la revendication 7, **caractérisé en ce que** les moyens pour limiter la dilatation volumique précités comportent une métallisation réalisée sur au moins une face desdits éléments CTP.

9. Appareil de protection électrique selon la revendication 8, **caractérisé en ce que** l'épaisseur de cette métallisation est supérieure à 50 µm lorsque celle-ci est réalisée en cuivre, et supérieure à 35 µm, lorsque celle-ci est réalisée en nickel.

10. Appareil de protection électrique selon l'une quelconque des revendications 1 à 9, **caractérisé en ce que** le dispositif limiteur précité comporte en outre au moins un shunt (11) connecté en parallèle avec respectivement au moins un élément CTP, et permettant de fixer la valeur maximale du courant limité après la transition de l'élément CTP.

11. Appareil de protection électrique selon la revendication 10, **caractérisé en ce que** la valeur résistive du ou de chaque shunt (11) est comprise entre dix fois et vingt fois la valeur de la résistance CTP correspondante à température ambiante.

12. Appareil de protection électrique selon l'une quelconque des revendications 1 à 11, **caractérisé en ce que** le dispositif limiteur précité comporte en outre au moins un composant dit protecteur contre les surtensions, connecté en parallèle avec respectivement au moins un élément CTP, et destiné à limiter d'éventuelles surtensions susceptibles d'endommager le composant CTP.

13. Appareil de protection électrique selon l'une quelconque des revendications précédentes, **caractérisé en ce que** chaque élément CTP est réalisé à base d'un polymère semi-cristallin.

14. Appareil de protection électrique selon la revendication 13, **caractérisé en ce que** c'est un disjoncteur miniature.

## Patentansprüche

1. Elektrisches Schutzgerät, das mindestens einen Hauptleiter und, für den oder jeden Hauptleiter, mindestens eine Strombegrenzungsvorrichtung umfasst, die mit dem Hauptleiter in Reihe geschaltet ist, um den Strom zu begrenzen, wenn ein Strom- oder Temperaturschwellenwert überschritten wird, wobei die Begrenzungsvorrichtung ein Element aufweist, das aus einem Material mit positivem Temperaturkoeffizient hergestellt ist, PTC-Element genannt, das geeignet ist, Auslösemittel des Öffnungsmechanismus der Kontakte des Schutzgerätes zu steuern, um so das Öffnen der Kontakte des Gerätes zu bewirken, wenn der genannte Schwellenwert überschritten wird, was eine Zustandsänderung des Elements zwischen einem Zustand mit niedrigem Widerstand und einem Zustand mit hohem Widerstand zur Folge hat, wobei das genannte PTC-Element (6, 7, 8, 9) die genannten Auslösemittel (d) aufweist, derart, dass dieses Element selbst die Funktionen der Begrenzung des Fehlerstroms und der Auslösung des Öffnungsmechanismus (M) der Kontakte (1, 2) sicherstellt,
wobei die genannten Auslösemittel (d) durch die Abmessungsänderungen des genannten PTC-Elements (6 bis 9) in einer Vorzugsrichtung während der genannten Zustandsänderung gesteuert werden, wobei diese Abmessungsänderung geeignet ist, die Verlagerung eines Abschnitts des PTC-Elements in Richtung einer Auslösestange (5) zu verursachen, die zu den genannten Auslösemitteln (d) gehört, wobei diese Stange geeignet ist, wenn sie betätigt wird, eine mechanische Verhakung des Mechanismus des Gerätes zu lösen, wobei dieses Lösen zur Folge hat, dass das automatische Öffnen der Lichtbogenkontakte bewirkt wird,
**dadurch gekennzeichnet, dass** die genannte Begrenzungsvorrichtung mehrere PTC-Elemente (6 bis 9) aufweist, die in der genannten Vorzugsrichtung gestapelt und elektrisch parallelgeschaltet sind.

2. Elektrisches Schutzgerät nach Anspruch 1, **dadurch gekennzeichnet, dass** die PTC-Elemente (6, 7, 8, 9) außerdem Mittel zur Detektion von Überlastfehlern und Mittel zur Detektion von Kurzschlussfehlern aufweisen.

3. Elektrisches Schutzgerät nach Anspruch 1 oder 2, **dadurch gekennzeichnet, dass** die genannten Auslösemittel (d) durch die Änderung der Dicke der PTC-Elemente während der genannten Zustandsänderung gesteuert werden.

4. Elektrisches Schutzgerät nach einem der vorhergehenden Ansprüche, **dadurch gekennzeichnet, dass** es Verstärkungsmittel aufweist, die es ermöglichen, ausgehend von einer kleinen Verlagerung eines Abschnitts der genannten PTC-Elemente (6 bis 9), eine angewendete Kraft mit größerer Stärke auszuüben.

5. Elektrisches Schutzgerät nach einem der vorhergehenden Ansprüche, **dadurch gekennzeichnet, dass** die Anzahl gestapelter Elemente (6 bis 9) zwischen zwei und zehn beträgt.

6. Elektrisches Schutzgerät nach Anspruch 5, **dadurch gekennzeichnet, dass** die Anzahl gestapelter Elemente (6 bis 9) vier ist.

7. Elektrisches Schutzgerät nach einem der vorhergehenden Ansprüche, **dadurch gekennzeichnet, dass** es Mittel zum Begrenzen der Volumenausdehnung der PTC-Elemente in mindestens einer anderen Richtung als der Vorzugsrichtung aufweist.

8. Elektrisches Schutzgerät nach Anspruch 7, **dadurch gekennzeichnet, dass** die genannten Mittel zum Begrenzen der Volumenausdehnung eine Metallisierung umfassen, die auf mindestens einer Seite der PTC-Elemente ausgebildet ist.

9. Elektrisches Schutzgerät nach Anspruch 8, **dadurch gekennzeichnet, dass** die Dicke dieser Metallisierung größer als 50 µm ist, wenn sie aus Kupfer ausgebildet ist, und größer als 35 µm, wenn sie aus Nickel ausgebildet ist.

10. Elektrisches Schutzgerät nach einem der Ansprüche 1 bis 9, **dadurch gekennzeichnet, dass** die genannte Begrenzungsvorrichtung außerdem mindestens einen Shunt (11) aufweist, der zu jeweils mindestens einem PTC-Element parallelgeschaltet ist und es ermöglicht, den maximalen Wert des begrenzten Stroms nach dem Durchfluss durch das PTC-Element festzulegen.

11. Elektrisches Schutzgerät nach Anspruch 10, **dadurch gekennzeichnet, dass** der Widerstandswert des oder jedes Shunts (11) zwischen dem Zehnfachen und dem Zwanzigfachen des Wertes des entsprechenden PTC-Widerstands bei Umgebungstemperatur liegt.

12. Elektrisches Schutzgerät nach einem der Ansprüche 1 bis 11, **dadurch gekennzeichnet, dass** die genannte Begrenzungsvorrichtung außerdem mindestens eine Komponente, Überspannungsschutzvorrichtung genannt, aufweist, die zu jeweils mindestens einem PTC-Element parallelgeschaltet ist und dazu bestimmt ist, eventuelle Überspannungen zu begrenzen, die geeignet wären, die PTC-Komponente zu beschädigen.

13. Elektrisches Schutzgerät nach einem der vorhergehenden Ansprüche, **dadurch gekennzeichnet, dass** jedes PTC-Element auf der Basis eines semikristallinen Polymers hergestellt ist.

14. Elektrisches Schutzgerät nach Anspruch 13, **dadurch gekennzeichnet, dass** es ein Miniaturtrennschalter ist.

## Claims

1. Electrical protection unit comprising at least one main conductor and, for the or each main conductor, at least one current-limiting device connected in series with said main conductor in order to limit the current when a current threshold or temperature threshold is exceeded, said limiting device comprising an element made from a material with a positive temperature coefficient, called PTC element, and being able to control means for tripping the mechanism for opening the contacts of the protection unit, so as to bring about opening of the contacts of the unit when the abovementioned threshold is exceeded, leading to a change in state of said element between a low-resistance state and a high-resistance state, said abovementioned PTC element (6, 7, 8, 9) comprising the abovementioned trip means (d), such that this element itself performs the functions of limiting the fault current and of tripping the mechanism (M) for opening the contacts (1, 2), the abovementioned trip means (d) being controlled by the variations in dimension, in a preferred direction of the abovementioned PTC element (6 to 9), during the abovementioned change in state, this variation in dimension being able to lead to the movement of a portion of the PTC element in the direction of a trip bar (5) belonging to the abovementioned trip means (d), this bar being able, when it is actuated, to release a mechanical latch of the mechanism of the unit, this releasing having the effect of leading to the automatic opening of the arc contacts, **characterized in that** the abovementioned limiting device comprises a plurality of PTC elements (6 to 9) stacked in the abovementioned preferred direction and connected electrically in parallel.

2. Electrical protection unit according to Claim 1, **characterized in that** said PTC elements (6, 7, 8, 9) furthermore comprise means for detecting overload faults and means for detecting short-circuit faults.

3. Protection unit according to Claim 1 or 2, **characterized in that** the abovementioned trip means (d) are controlled by the variation in the thickness of the PTC elements during the abovementioned change in state.

4. Electrical protection unit according to any one of the preceding claims, **characterized in that** it comprises amplification means for exerting a high-strength applied force based on a small movement of a portion of the abovementioned PTC elements (6 to 9).

5. Electrical protection unit according to any one of the preceding claims, **characterized in that** the number of stacked elements (6 to 9) is between two and ten.

6. Electrical protection unit according to Claim 5, **characterized in that** the number of stacked elements (6 to 9) is four.

7. Electrical protection unit according to any one of the preceding claims, **characterized in that** it comprises means for limiting the volumetric expansion of the PTC elements in at least one direction other than the preferred direction.

8. Electrical protection unit according to Claim 7, **characterized in that** the abovementioned means for limiting the volumetric expansion comprise a metallization formed on at least one face of said PTC elements.

9. Electrical protection unit according to Claim 8, **characterized in that** the thickness of this metallization is greater than 50 µm when it is made of copper, and greater than 35 µm when it is made of nickel.

10. Electrical protection unit according to any one of Claims 1 to 9, **characterized in that** the abovementioned limiting device furthermore comprises at least one shunt (11) connected in parallel respectively with at least one PTC element, and which makes it possible to set the maximum value of the limited current after the transition of the PTC element.

11. Electrical protection unit according to Claim 10, **characterized in that** the resistance of the or each shunt (11) is between ten times and twenty times the value of the corresponding PTC resistance at ambient temperature.

12. Electrical protection unit according to any one of Claims 1 to 11, **characterized in that** the abovementioned limiting device furthermore comprises at least one what is called protection component for protecting against overvoltages, connected in parallel respectively with at least one PTC element and intended to limit any overvoltages liable to damage the PTC component.

13. Electrical protection unit according to any one of the preceding claims, **characterized in that** each PTC element is based on a semi-crystalline polymer.

14. Electrical protection unit according to Claim 13, **characterized in that** it is a miniature circuit breaker.
